# EUROPEAN PATENT SPECIFICATION

(11) **EP 4 321 008 B1**
(45) Date of publication and mention of the grant of the patent: **11.11.2026**
(21) Application number: 23189277.9
(22) Date of filing: 02.08.2023
(51) Int. Cl.: A01C 23/00

(54) **DISTRIBUTING DEVICE FOR LIQUID SUBSTANCES AND METHOD THEREOF**
ABGABEVORRICHTUNG FÜR FLÜSSIGE SUBSTANZEN UND VERFAHREN ZUM KLEMMEN DER ENTSPRECHENDEN ABGABEVORRICHTUNG
DISPOSITIF DE DISTRIBUTION POUR SUBSTANCES LIQUIDES ET PROCÉDÉ DE SERRAGE DU DISPOSITIF DE DISTRIBUTION RESPECTIF

(30) Priority: 11.08.2022 DE 102022120270
(43) Date of publication of application: 14.02.2024
(73) Proprietor: Alrena B.V., 7665 SH Albergen (NL)
(72) Inventor: SCHURINK, Gerard Johannes, 7665 SH Albergen (NL); HOEK, Johannes Bernardus Maria, 7665 SH Albergen (NL)
(74) Representative: Patentwerk B.V.

(56) References cited:
- EP-B1- 0 638 227
- CN-A- 113 000 158
- DE-U1- 202011 050 654
- US-A1- 2022 087 098

## Description

The present invention relates to a distributing device for liquid substances, such as for example manure. The invention also relates to a method for clamping a rotor of a distributing device, and a method for the spreading of liquid substances.

For soil manuring, manuring devices (manure spreaders) are used, which are designed for spreading liquid manure uniformly over the ground. For this purpose, manure spreaders are equipped with one or more (generally two) spreader arms, provided with several pipelines, with which the liquid manure can be led to various distribution openings, and from these distribution openings can end up on the ground. For distributing the liquid manure over the multiple pipelines, distributors are used, which for this purpose, in order to limit the total line length, are often placed on the spreader arms.

Existing distributors are provided with a manure inlet and one or more manure outlets connected to a manure reservoir (for example a slurry trailer), it being possible to connect multiple pipelines to the manure outlets. These distributors are also equipped with one or more rotary knives and a perforated disk mounted inside the distributor against the manure outlets, said perforated disk being positioned relative to the manure outlets in such a way that the holes of the perforated disk coincide with the manure outlets. As the knives slide across the perforated disk serving as counter knife, solid constituents present in the liquid manure are cut up and some of the manure outlets are closed by the knives, so that the pressure of the manure on the other manure outlets is increased, which supports manure outflow. What is important is that the perforated disk is not necessary; it is also conceivable that the knives are moved directly along the outlets, and the pieces of manure are cut up there.

The cutting-up of the solid constituents is important for preventing the pipelines becoming clogged by an excessive proportion of manure. This may have the result that a manure discharge connected to a line is blocked from delivering manure. It may thus happen that a part of the farmland is, undesirably, not supplied with manure. Therefore it is important to achieve good cutting-up of the larger, more solid parts of the manure. A number of factors play a relevant role in this. Firstly there is the matter that the knives should be and should remain sharp enough. Then it is important that the distance between knives and the outlets is not too great. If this distance becomes too great, it is possible that larger pieces of manure find a passageway to the opening of the outlet and possibly clog the latter.

In order to ensure that the knives are sufficiently close to the outlets, often several compression springs are used. These compression springs may for example bear on a knife, and be applied in the rotor under a certain pretension. In this way the spring presses the knives against the outlet. However, the drawback of this solution is that after some time the pressure that is exerted on the knives decreases. This problem is caused in particular by the wear of the knives and/or outlet and/or perforated disk. Owing to the lower pretension, it seems possible that in some cases, when the pressure exerted by the spring is decreased like this, pieces of manure may still pass through the opening. In addition, this may mean that (more) solid parts such as manure get under the cutting knife, and lodge between the cutting knife and the outlet, so that the distributor may become clogged.

Besides compression springs, alternatives are known for exerting pressure on the knives, so that these are forced sufficiently against the outlets. However, with these solutions it is very important that the rotor and the knives are fully aligned with one another. That is, the knives and the discharge openings are located perfectly parallel to each other. This is a time-consuming and expensive process. In addition, an impact on the distributor may cause the alignment between the components to be disturbed, which may cause the distributor to seize up. Examples of these solutions are given in for example DE202011050654, EP0638227, US2022087098, and CN113000158.

A first aim of the present invention is to provide a distributor, wherein pressure can be applied more easily.

A second aim of the present invention is to provide a more robust tensioning device, in order to apply tension in a more robust manner.

For this purpose, the present invention provides a distributing device according to claim 1.

Because the rotor is divided into a first rotor part and a second rotor part, it is possible to clamp the rotor easily. That is, it makes it possible for example to force both rotor parts apart by means of the at least one tensioning device. Moreover, forcing apart is to be understood as the forcing apart from inside, but it should also be understood as the pulling apart from outside. However, the forcing apart from inside of the first rotor part and the second rotor part is preferred. The first rotor part and the second rotor part are thus forced apart, wherein the cutting knives of said rotor parts are forced against the outlets. The expression cutting knife is to be understood broadly. Thus, for example a plastic block that is configured for the cutting (up) of manure may satisfy the expression cutting knife. The pushing of at least one of the two rotor parts, preferably of both rotor parts, in a direction towards the outlets. It is conceivable that the at least one tensioning device is configured for the pushing apart of both rotor parts relative to one another.

Because the tensioning device engages centrally, it is possible to compensate some degree of play, or alignment between the rotor parts. Engaging centrally is to be understood as the tensioning device engaging on a central portion. If, according to the invention, the rotor has a substantially cylindrical cross-section, central is a region that is located around the axis of the rotor, wherein the region is a radius of 1, 5, or 10 percent of the radius of the rotor. By having the tensioning device engage centrally on the rotor parts, a pressure can be applied more easily. That is, the knives can be pushed against the outlets more easily. This solution makes it superfluous to apply a pressure on all the separate knives, which is more sensitive to errors because several operations are required. The central application of tension thus makes it possible to provide a more robust system. Misalignment between rotor parts may be a consequence of an inaccurate, non-parallel, alignment of the perforated disks and/or the alignment of the walls of the distribution chamber.

Preferably the at least one first rotor part and the at least one second rotor part are rotatable and/or movable about substantially the same rotation axis. More preferably, the at least one first rotor part and the at least one second rotor part together form a combined rotating rotor. Moreover, the at least one first rotor part and the at least one second rotor part may be positioned mutually concentric relative to each other. It is preferred that the at least one tensioning device engages centrally on both the at least one first rotor part as well as on the at least one second rotor part. In this way it can be prevented that the tensioning device causes imbalance of the rotor parts. It is conceivable that the tensioning device is placed substantially in line with the at least one rotation axis. This ensures that the tensioning device engages as centrally as possible, so that possibly the forces that the tensioning device exerts on the rotor parts are distributed as well as possible. This is particularly advantageous if the rotor parts are rotatable about the same rotation axis.

According to a preferred embodiment of the present embodiment, the at least one first rotor part and the at least one second rotor part are connected or connectable together, wherein, in the connected state, the rotor parts are jointly rotatable about a rotation axis. Preferably this rotation axis is the same rotation axis. In the context of the present invention, connected or connectable together is not necessarily to be understood as rigid or fixed. It is preferably possible that the at least one first rotor part and the at least one second rotor part have some degree of freedom of movement relative to each other in the connected state. Preferably the at least one first rotor part and the at least one second rotor part, in the connected state, can move telescopically relative to each other. This telescopic mutual motion is preferably towards the rotation axis. The extent to which both rotor parts in the connected state can move telescopically depends on the height of the rotor parts.

The maximum motion is namely preferably such that the at least one first rotor part and the at least one second rotor part, in the state connected together, at least partially overlap, at least in the axial direction. In the connected state, the at least one first rotor part and the at least one second rotor part preferably rotate together about the same rotation axis. It is conceivable that the cutting knives of both rotor parts are located at a distance in the radial direction from the tensioning device. In this way, the tensioning device does not impede the motion of the knives.

Preferably, in the connected state, the connection between the at least one first rotor part and the at least one second rotor part prevents at least partially a mutual lateral motion between the rotor parts. This may for example be achieved by allowing the two rotor parts to come together at least partially. A possible, nonlimiting embodiment may be that for example the first rotor part is wider than the second rotor part, so that the first rotor part encloses the second rotor part at least partly in order to prevent mutual lateral motion.

Preferably, the connection, at least in the connected state, of the at least one first rotor part and the at least one second rotor part has a mutual misalignment, preferably relative to the rotation axis, of up to about 10 degrees, preferably about 20 degrees, more preferably 25 degrees. This is advantageous for production but also for installation. The accurate alignment of two rotor parts is a time-consuming and demanding job. Because the tensioning device engages on a central part, this may allow some misalignment, without the rotor parts twisting each other.

According to a preferred embodiment, one axis of the at least one tensioning device is substantially concentric with a rotation axis of at least one of the at least one first rotor part and/or the at least one second rotor part. This contributes to compensation of misalignment between the rotor parts. During clamping of a tensioning device of this kind, a predetermined degree of clamping will ensure a uniform distribution on the edge of the rotor part. That is, in an ideal scenario, the extent of movement of the tensioning device will be converted one-to-one into a movement of the rotor part. This movement is substantially towards the at least one rotation axis. The non-concentric placement of the tensioning device provides a lever action during tightening, which is not advantageous because more pressure is exerted on one edge and may thus result in disproportionate pressure. In extreme cases this may cause seizing of the rotor. If a disproportionate pressure is exerted on the knives, uneven wear may occur, which is undesirable. Besides solving this uneven wear, the concentric mounting of the tensioning device with the rotation axis of at least one rotor part also ensures that some degree of misalignment can be compensated. Although it is possible to compensate misalignment by having the tensioning device engage centrally, this effect is further increased by placing the tensioning device concentrically.

Preferably the at least one tensioning device comprises at least one tensioning body and comprises at least one adjustable tensioning element. By means of the adjustable tensioning element, the clamping of the rotor parts can be further simplified. Preferably, the pressure applied by the tensioning device can easily be adjusted by means of the at least one tensioning element. The tensioning element may then for example be configured as a bolt, wherein turning the bolt can increase and/or decrease the pressure applied. For this purpose, preferably the at least one tensioning element, preferably the bolt, engages directly or indirectly on the tensioning body. The tensioning body may engage, directly or indirectly, on the at least one first rotor part and/or the at least one second rotor part, in order to apply pressure there. Optionally it is conceivable that the tensioning element is an automatically adjustable tensioning element, such as a spring. In a preferred embodiment, the at least one adjustable tensioning element is a coupling or a coupling body, for coupling the adjustable tensioning element to an external connection, such as a supply of a pressure medium. This external connection may for example be a supply line for supplying a pressure medium. Preferably the pressure medium is selected from the group consisting of: a fat, an oil, air, some other suitable medium. In this embodiment variant the tensioning device comprises a, preferably closed, pressure chamber for receiving a pressure medium. The at least one tensioning body is preferably in contact, directly or indirectly, with the pressure medium in the pressure chamber. By supplying the pressure medium via the coupling to the pressure chamber, the pressure there can be raised. The pressure medium can thereby exert pressure on the tensioning body so that the desired pressure can be exerted on the cutting knives. The coupling may be an open coupling or a closable coupling. The open coupling preferably has a fixed passage to the pressure chamber, wherein the pressure medium can be brought, by means of a pump or similar means, under pressure into the pressure chamber.

By increasing the pressure in the pressure chamber, a greater outwards-directed pressure can be exerted on the clamp bodies. Preferably a discharge element, such as a discharge opening or discharge valve, is provided on the at least one pressure chamber. The discharge element may be configured for the discharge of pressure medium from the pressure chamber. In this way, the pressure exerted on the clamp bodies may also be lowered if necessary. Preferably, the tensioning body is provided using a seal. In this way, even at significant pressures, it can be prevented that the pressure medium in the pressure chamber can leak to the outside past the tensioning body. Another embodiment of the tensioning element is a controllable tensioning element, wherein the tensioning element can be controlled, preferably electronically, by a control system. Besides electronically, the control system may also be operated hydraulically, by means of the pressure of manure, or in some other way. This control system may be configured to be able to determine a pressure to be applied, on the basis of sensor data, and control the controllable tensioning element accordingly. This has the advantage that a user does not have to pay attention to the distributing device during use. It is then also possible to apply the pushing apart of the rotor parts dynamically, wherein wear during use can be compensated directly.

According to a preferred embodiment, the at least one tensioning body exerts a tension, directly or indirectly, on the central portion of the at least one first rotor part and/or the at least one second rotor part in order to force the at least one cutting knife of both rotor parts against the outlets. Preferably wherein a tension that is exerted by the tensioning device is adjustable by means of the adjustable tensioning element, wherein the tension exerted depends on the extent of movement of the adjustable tensioning element. Preferably at least one tensioning body is provided with a shearing surface, said surface being at an angle relative to the surface on which the tensioning body engages. This surface may serve as a contact surface for the tensioning element. Moreover, the adjustable tensioning element is preferably in contact with the shearing surface of the tensioning body, so that a movement of the tensioning element in a radial direction gives rise to a movement of the tensioning body in the axial direction. In this way, the adjustable tensioning element may be applied at an angle, preferably an angle of 90 degrees, relative to the rotation axis, so that this is possibly more easily accessible for the adjustment thereof. It is preferred that a mutual frictional force between the at least one tensioning body and the at least one adjustable tensioning element comprises and/or forms a locking function, for locking together the at least one tensioning body and the at least one adjustable tensioning element. In particular, this locking function only operates in one direction. Preferably the locking function prevents the pressure that the tensioning device exerts becoming smaller, and it at least remains the same. This locking function due to mutual friction between the tensioning body and the adjustable tensioning element may be achieved because the static frictional force, possibly in combination with an imposed force as a result of the tensioning element, is greater than the external force that is exerted, in the opposite direction to the component, on the tensioning body and/or tensioning element. The maximum frictional force depends on the static friction coefficient, and depends on the selected material. The imposed force as a result of the tensioning element depends on the extent to which this is tensioned.

Preferably the at least one tensioning device comprises at least one first tensioning body and at least one second tensioning body, wherein the at least one adjustable tensioning element is configured so that both clamp bodies exert a tension, directly or indirectly, on respectively the at least one first rotor part and the at least one second rotor part, in order to force the at least one cutting knife of both rotor parts against the outlets. In this way, a more uniform pressure can be exerted on the knives of both rotor parts. Both clamp bodies can preferably be adjusted by one adjustable tensioning element. However, it is also conceivable that the two clamp bodies are adjustable separately by means of their own separate adjustable tensioning element.

According to an embodiment variant, a contact point between the at least one tensioning body and at least one of the first rotor part or the second rotor part is located near the plane that is spanned by the at least one cutting knife, preferably at a distance between 0 cm and 50 cm from said surface, more preferably at a distance between 0 cm and 25 cm from said surface. The contact point between the at least one tensioning body and at least one of the first rotor part or the second rotor part may be understood as the point where the tensioning body comes in contact with the rotor part. This is also to be understood as a contact line, if applicable. Preferably the contact point, or contact line, is located as close as possible to the surface that is tensioned by the at least one cutting knife. It is conceivable that the at least one rotor part and/or the at least one rotor part can tilt about the contact point, or contact line, which makes it easier to compensate misalignment between the rotor parts. If the tensioning device is provided with two or more clamp bodies, the aforementioned distance is preferably applicable to both clamp bodies.

Preferably the distributing device also comprises a supply of medium, particularly a gas supply, wherein the gas supply connects to a side of the cutting knife turned towards the outlet, wherein the at least one tensioning device is located at least partially in the gas supply. In this way it can at least partly be prevented that the liquid substance ends up in parts of the tensioning device. In a further embodiment the at least one cutting knife is provided with a hollow stem placed perpendicular to the cutting knife, this hollow stem being inserted rotatably in a hollow, tubular holder. This tubular holder may form part of one of the two rotor parts. However, it is also conceivable that this tubular holder forms part of the connection between the rotor parts. That is, it serves for receiving at least one cutting knife movable in the axial direction. It is also possible that both rotor parts are provided with a hollow tubular holder, whether or not forming an integral part, wherein a separate tubular connection partly encloses these two tubular holders of the rotor parts. The separate tubular connection should then be of a larger diameter, so that the two tubular holders can fit therein, and consequently are restricted in motion laterally. The hollow stem inserted rotatably in the hollow tubular holder makes rotation of the cutting knife relative to the rotor possible, so that the part of the cutting knife that performs the cutting action can be varied, which is beneficial for the durability of the cutting knife. The hollow stem may, together with the hollow tubular holder, and/or with the separate tubular connection, also serve as gas supply, which connects to the side of the cutting knife facing the outlet. It is possible to make the cutting knives conical, wherein the cone is hollow, so that a space is left between the conical surface and a wall of the distribution chamber provided with outlets. During the covering of an outlet by the cutting knife, this space is in contact with the outlet, so that the supply of gas from the side of the cutting knife facing the outlet to the outlet is improved. Both rotor parts may also be provided with several cutting knives, so as to be able to cover several outlets simultaneously. If several outlets are covered by the cutting knives at the same time, the pressure in the distribution chamber and on the other outlets will increase, which improves the through-flow and distribution of the liquid substances through the outlets and the pipelines connected thereto. Furthermore, it is possible to provide the cutting knives on the rotor parts with rotational symmetry, so that the centre of mass of the rotor coincides with the axis of the drive shaft, and vibrations and resonance of the rotating drive shaft can be limited. Preferably, two or more outlets of the distribution chamber are applied on a first side and a second side, preferably turned away from the first side, wherein the at least one cutting knife of the at least one first rotor part and at least one second rotor part are configured to cover successively respective outlets on the first side and second side of the distribution chamber. In this way, uniform discharge can be achieved on both sides of the distributing device. Preferably at least one tensioning body engages on a clamping surface, said tensioning plane being a part of at least one of the first rotor part or the second rotor part. It is moreover also conceivable that at least one part of at least one tensioning plane comprises an opening for, or defines a part of a wall of, an air supply duct. Preferably wherein the at least one tensioning plane comprises at least one recess and/or receiving space, for receiving at least one part of the at least one tensioning body, preferably a part of an end thereof. A recess or receiving space of this kind may contribute to easier installation. Thus, a user can easily observe whether a tensioning body fits in the recess or receiving space. This also helps to ensure correct installation, and a user cannot by accident allow the tensioning body to engage on another point. It is conceivable that, in order to fit at least one tensioning body easily, the end of the tensioning body may have the form of a truncated cone, or a regular cone. In a preferred embodiment, the recess and/or receiving space and the part of the tensioning body fitted therein together form a ball joint. Accordingly, by exerting pressure on this ball joint in the axial direction, the two rotor parts are forced apart, but misalignment can be compensated. In addition, in this way, during operation a movement, particularly rotation, about this ball joint can easily be compensated. Preferably the recess and/or receiving space is somewhat larger than the part of the tensioning body that is to be inserted therein, so that any movement between them is reduced.

The present invention also relates to a method for clamping a rotor of a distributing device according to the present invention.

The present invention will be discussed in more detail hereunder on the basis of the following figures, in which:
- Fig. 1 shows a perspective view of a part of a distributing device according to a first embodiment;
- Fig. 2 shows a schematic representation of the distributing device according to the invention;
- Fig. 3 gives a top view of the distributing device from Fig. 1;
- Fig. 4 shows a cross-section of the distributing device according to the invention;
- Fig. 5 shows an exploded detail view of the distributing device from Fig. 4; and
- Figs. 6A and 6B show an alternative embodiment variant.

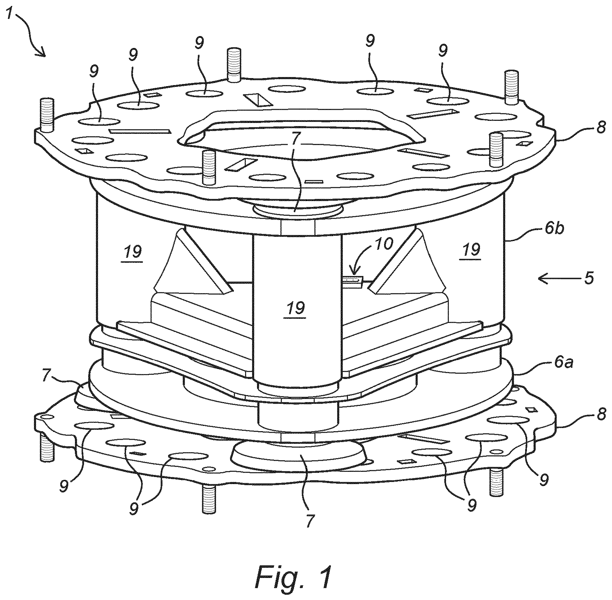

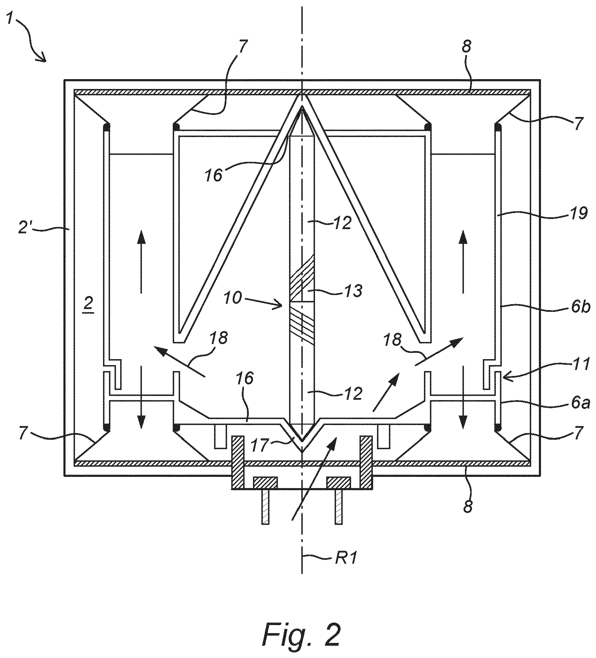

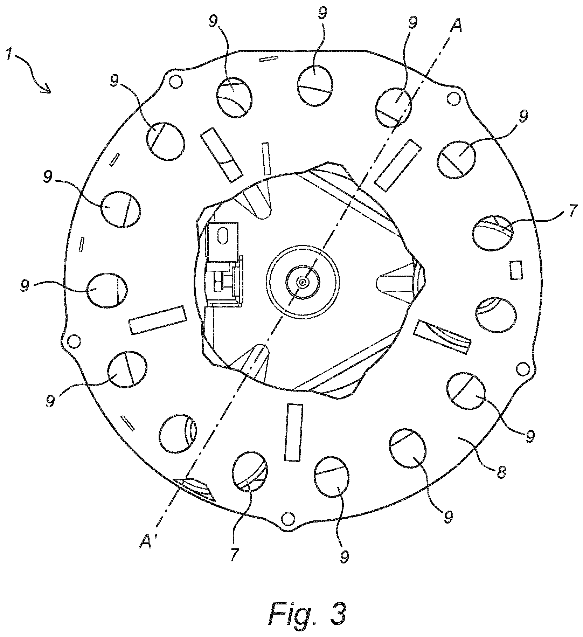

Fig. 1 shows a part of a distributing device 1 according to the present invention. For purposes of illustration, a distribution chamber 2, at least the walls 2' (Figs. 2, 3) thereof, are not shown. The figure shows two perforated disks 8, with one or more holes 9 therein. This perforated disk is preferably provided in the distribution chamber in such a way that the holes 9 align with the outlets 4 of the distribution chamber 2. However, said perforated disks 8 are not essential, and it is conceivable that the distributing device 1 may be made without these perforated disks 8. A rotatably movable rotor 5 is mounted between the two perforated disks. The rotor may be driven by a conventional drive, which is not shown in these figures. Preferably, one or more cutting knives 7 are provided on the rotor 5, said cutting knives 7 being forced under pressure against the perforated disk 8 serving as a counter knife for the cutting knives 7. The cutting knives 7 are preferably mounted at least partially in hollow tubular holders 19. The cutting knives 7 are configured for the cutting up of coarser pieces in the liquid substance. For example larger pieces in liquid manure. By cutting these up before they are pumped through the manure line, possible blockage may be prevented. It is then important that the cutting knives 7 are pushed with sufficient pressure against the perforated disk 8, and it is important that the cutting knives 7 cannot come away from the perforated disk 8 through loss of pressure. However, it is also conceivable that the cutting knives 7 are pressed directly against openings 20 of the distribution chamber in order to cut the manure up sufficiently finely. In order to force the cutting knives 7 sufficiently against the perforated disks 8, a tensioning device 10 is provided. This tensioning device 10 is configured for pushing the cutting knives 7 against the perforated disks 8. To arrange this more efficiently, the rotor 5 according to the present invention comprises a first rotor part 6a and a second rotor part 6b. The tensioning device 10 forces the first rotor part 6a and the second rotor part 6b apart.

Fig. 2 shows a schematic representation of the distributing device 1 according to the invention, wherein the tensioning device 10 can be explained further. This figure also shows schematically the distribution chamber 2, including the walls 2' that define the distribution chamber 2. It should be noted that the distribution chamber 2 as shown in this figure is purely indicative, and other shapes are not excluded. The rotor 5, with the first rotor part 6a and the second rotor part 6b, is mounted rotatably within the distribution chamber 2. It is preferred that the first rotor part 6a and the second rotor part 6b are connected together or connectable together. This mutual connection 11 is configured for preferably at least limiting any lateral movement relative to the rotor parts 6a, 6b mutually. According to this embodiment, the connection 11 is formed as a telescopic connection 11. The connection 11 preferably allows some degree of axial mutual motion of the rotor parts 6a, 6b. In this way, good alignment of the cutting knives 7 relative to the holes 9 in the perforated disk 8 and/or outlets 4 can be achieved simultaneously, as well as compensating any misalignment of the two rotor parts 6a, 6b mutually. This misalignment of the rotor parts 6a, 6b may be determined relative to the rotation axis R1. The tensioning device 10 preferably comprises at least one tensioning body 12, and at least one adjustable tensioning element 13. In this embodiment, the tensioning device 10 comprises two clamp bodies 12, both of which push a respective rotor part 6a, 6b towards the perforated disk 8. By means of the adjustable tensioning element 13, which is only shown schematically here, the degree of pressure that the clamp bodies 12 exert on the rotor parts 6a, 6b can be adjusted. The tensioning device 10, in particular the clamp bodies 12, engage on a central portion of the rotor parts 6a, 6b, in particular on a tensioning plane16 that may form part, as in this figure, of the rotor parts 6a, 6b. As a result, the tensioning device 10 makes it possible to compensate some degree of mutual misalignment of the rotor parts 6a, 6b. Misalignment between rotor parts 6a, 6b may be a consequence of inaccurate alignment of the perforated disks 8 and/or the alignment of the walls 2' of the distribution chamber 2. The distributing device 1 according to the present invention may also be provided with a gas supply 18, preferably air supply. This may for example partly be led along the tensioning device 10, and then flow towards, and via, the hollow tubular holders 19 to the hollow cutting knives 7. If an opening or through-hole of a cutting knife 7 is aligned with a hole 9 in the perforated disk 8 and/or with the outlet 4, a medium, such as air, may be drawn in through the hoses that can be connected to the outlets 4. This can combat vacuum formation in the hoses, and the vibrations arising therefrom. In order to simplify the installation of the tensioning device 10, a receiving space 17 and/or recess 17 may be provided on the tensioning plane16 and/or the rotor part 6a, 6b. Preferably, the tensioning body 12 can be fitted at least partially in this receiving space 17 and/or recess 17. This makes it possible to place the tensioning device 10 at the same location each time. It may be desirable, for example for maintenance or cleaning, to take apart the distributing device 1, including the tensioning device 10, temporarily. This measure may facilitate accurate refitting, so that the life of the distributing device 1 can be increased.

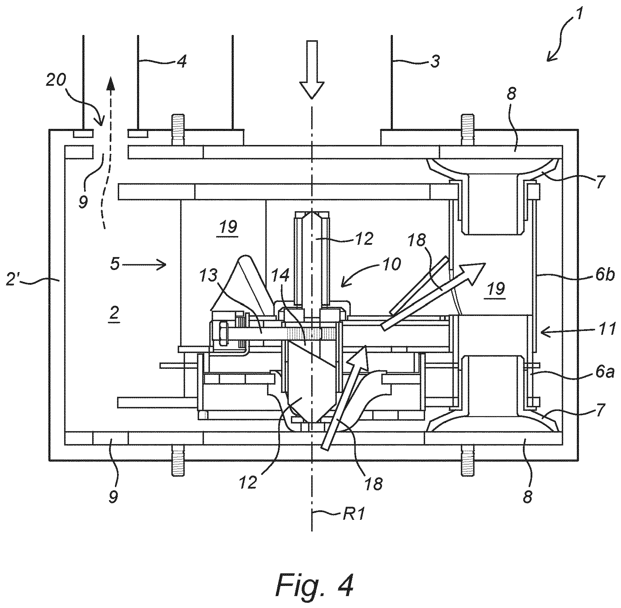

Fig. 3 shows a top view of the distributing device 1 according to the present invention. Here, the perforated disk 8, with the holes 9 applied therein, is clearly visible from above. The figure shows a cutting line A-A', the cross-section for Fig. 4 being made on said line A-A'. Fig. 4 shows a cut-away cross-section of the distributing device 1 according to the invention. This cross-section is made along the line A-A' from Fig. 3, wherein for indicative purposes the distribution chamber 2 is also included. This figure includes an alternative tensioning device 10. The distribution chamber 2 shows a central inlet 3, which is configured to bring liquid substance, such as manure, into the distribution chamber 2. Although only one inlet 3 and one outlet 4 are shown here, it is conceivable that several inlets 3 may be applied, but the possibilities also include several outlets 4. This figure shows that the at least one outlet 4 is aligned with the opening 9 in the perforated disk 8. In this way, if the opening 9 is not covered by one of the cutting knives 7, the manure stream can flow through the outlet 4. The tensioning device 10 according to this embodiment variant is provided with an adjustable tensioning element 13. This is formed by a bolt 13, which by means of rotation can adjust the degree of pressure that the tensioning body 12 exerts. Turning the bolt 13 ensures that the shearing block 14 is pulled towards the head of the bolt 13. Because the shearing block is provided with a sloping side, on movement towards the head of the bolt 13, this presses the tensioning body 12 in the axial direction towards the rotor parts 6a, 6b. Loosening the bolt 13 ensures that the shearing block 14 moves just away from the head of the bolt, and therefore the tensioning body 12, under a rotor part 6a, 6b, can move upwards again. Preferably the shearing block 14 provides a blocking function. That is, after turning or tightening the bolt 13, the static friction between the shearing block 14 and the tensioning body 12 is so great that the shearing block 14 is tensioned. This may prevent the tensioning body 12 coming away. The cutting knives 7 are mounted in the tubular holders 19. In this embodiment variant, the tubular holders 19 are assembled from two tubular holder parts, wherein both parts of the tubular holder 19 form part of one of the rotor parts 6a, 6b. Preferably one of the tubular holder parts is wider than the other, so that these can fit telescopically in each other. This telescopic connection 11 allows movement between the two rotor parts 6a, 6b in the axial direction, but impedes mutual motion of the two rotor parts 6a, 6b in the lateral direction. Thus, the rotor parts 6a, 6b are joined together. The maximum amount by which the rotor parts 6a, 6b can move in the axial direction is determined by the wall 2' of the distribution chamber and/or by the perforated disks 8.

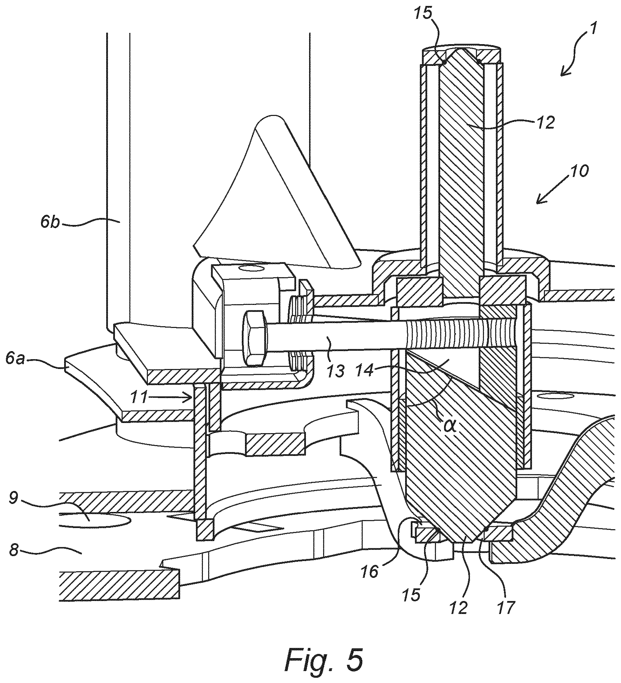

The tensioning device 10 according to the present invention is shown in more detail in Fig. 5. Here, a part of the telescopic connection 11 between the rotor parts 6a, 6b can be seen in more detail. It can also be seen in more detail how the bolt 13, which forms the adjustable tensioning element 13, is fitted in the shearing block 14.

By turning the bolt, the shearing block 14 can be pulled towards the head of the bolt 13. Because the shearing block 14 cannot or can barely move in the axial direction, this block 14 will push at least the lower tensioning body 12 downwards. By providing the shearing block 14 and the tensioning body 12 with contact surfaces, which are located at a complementary angle *α*, it can be achieved that the tensioning device comprises a blocking function, wherein after further clamping, using the tensioning element 13 for this, this cannot fade during use. Owing to the friction between the shearing block 14 and the tensioning body 12, the mutual position between them is locked. The tensioning body 12 makes contact on a contact point and/or contact line 15 with the tensioning plane16. In this embodiment variant, the lower tensioning plane16 is recessed. Moreover, the placement of this tensioning plane16 is such that the contact point 15 is as close as possible to the perforated disk 8.

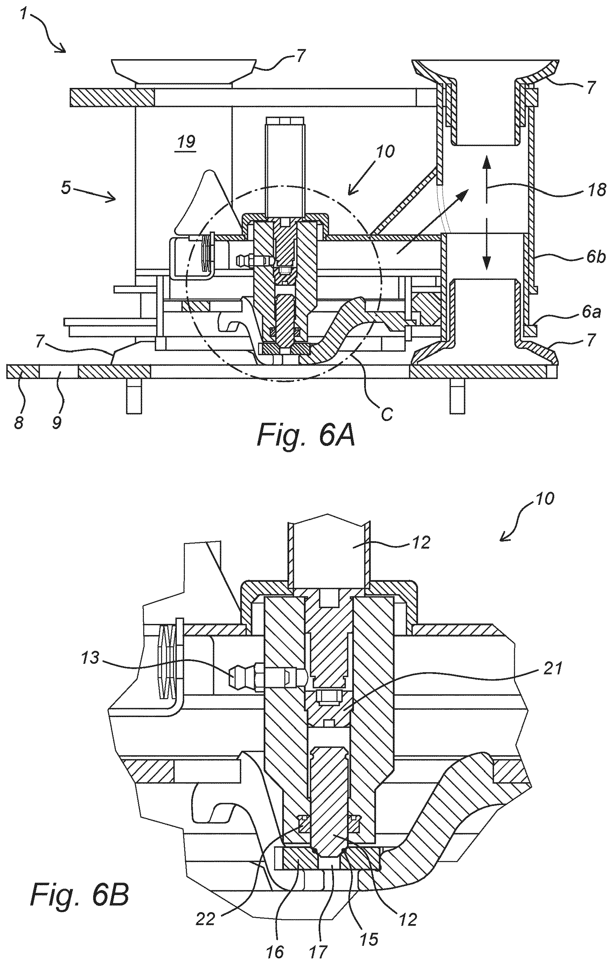

An embodiment of the distributor 1 according to the invention is shown in Fig. 6a. This embodiment coincides substantially with the other embodiments, but it includes an alternative tensioning device 10. This tensioning device is shown in the circled part C of the distributor 1. The alternative tensioning device 10 is shown in more detail in Fig. 6B. In this figure the adjustable tensioning element 13 is formed as a coupling, for coupling the adjustable tensioning element 13 to an external connection. This connection may for example be a supply line, for supplying a pressure medium, such as for example fat, oil, air, or some other suitable fluid. By supplying pressure medium to the coupling 13, the pressure medium can be brought into a pressure chamber 21 of the tensioning device 10. This may be by forming the coupling 13 as an open coupling, with a fixed passage to the pressure chamber 21, or by forming the coupling 13 as a closable coupling 13, wherein the feed is preferably under pressure continuously and opening of the closable coupling leads to filling of the pressure chamber 21. By increasing the pressure in the pressure chamber 21, more pressure directed outwards can be exerted on the clamp bodies 12. It is conceivable that a discharge point (not shown) is connected to the pressure chamber 21. This may be configured for the discharge of pressure medium from the pressure chamber 21. In this way, the pressure exerted on the clamp bodies 12 can also be lowered if necessary. Preferably the tensioning body 12 is provided using a seal 22. In this way, even at significant pressures, it can be prevented that the pressure medium in the pressure chamber 21 leaks to the outside past the tensioning body 12.

## Claims

1. Distributing device (1) for liquid substances, such as for example manure, comprising:
- at least one distribution chamber (2), said distribution chamber (2) is provided with at least one inlet (3) and one or more outlets (4) for liquid substance;
- at least one rotor (5) mounted rotatably in the distribution chamber (2), wherein the rotor (5) comprises at least one first rotor part (6a) and at least one second rotor part (6b),
- at least one tensioning device (10), for pushing in a direction towards the outlets (4) and/or pushing apart relative to each other, of at least one of the two rotor parts (6a, 6b), preferably of both rotor parts (6a, 6b),
wherein the at least one tensioning device (10) engages centrally on the first rotor part (6a) and on the second rotor part (6b),
wherein the rotor (4) has a substantially cylindrical cross-section, **characterised in that** the tensioning device (10) engages centrally on a central portion being a region that is located around the axis of the rotor, wherein the region is a radius of 1, 5, or 10 percent of the radius of the rotor.

2. Distributing device (1) according to Claim 1, wherein the at least one first rotor part (6a) and the at least one second rotor part (6b) are rotatable about substantially the same rotation axis.

3. Distributing device (1) according to Claim 1 or 2, wherein the at least one first rotor part (6a) and the at least one second rotor part (6b) are mutually connected or connectable, wherein, in the connected state, the rotor parts (6a, 6b) are jointly rotatable about a rotation axis.

4. Distributing device (1) according to Claim 3, wherein, in the connected state, the connection between the at least one first rotor part (6a) and the at least one second rotor part (6b) at least partially prevents mutual lateral motion between the rotor parts (6a, 6b).

5. Distributing device (1) according to one of the preceding claims, wherein an axis of the at least one tensioning device (10) is substantially concentric with a rotation axis of at least one of the at least one first rotor part (6a) and/or the at least one second rotor part (6b).

6. Distributing device (1) according to one of the preceding claims, wherein the at least one tensioning device (10) comprises at least one tensioning body (12) and comprises at least one adjustable tensioning element (13), preferably wherein the at least one tensioning body (12) exerts, directly or indirectly, a tension on the central portion of the at least one first rotor part (6a) and/or the at least one second rotor part (6b) in order to force at least one cutting knife (7) of both rotor parts (6a, 6b) against the outlets (4).

7. Distributing device (1) according to Claim 6, wherein a tension that is exerted by the tensioning device (10) is adjustable by means of the adjustable tensioning element (13), wherein the tension exerted depends on the extent of displacement of the adjustable tensioning element (13).

8. Distributing device (1) according to one of Claims 6-7, wherein a contact point (15) between the at least one tensioning body (12) and at least one of the first rotor part (6a) or the second rotor part i(6b) s located near the plane that is spanned by at least one cutting knife (7), preferably at a distance between 0 cm and 50 cm from said plane, more preferably at a distance between 0 cm and 25 cm from said plane.

9. Distributing device (1) according to one of Claims 6-8, wherein at least one tensioning body (12) engages on a tensioning plane (16), said tensioning plane (16) being a part of at least one of the first rotor part (â) or the second rotor part (6b), preferably wherein the at least one tensioning plane (16) comprises at least one recess (17) and/or receiving space (17), for receiving at least a part of the at least one tensioning body (12), preferably a part of an end thereof.

10. Distributing device (1) according to one of the preceding claims, wherein the distributing device further comprises a medium supply, particularly a gas supply (18), wherein the gas supply (18) connects to a side of a cutting knife (7) facing the outlet (4), wherein the at least one tensioning device (10) is located at least partially in the gas supply (18).

11. Distributing device (1) according to one of the preceding claims, wherein two or more outlets of the distribution chamber (2) are provided on a first side and a second side, preferably turned away from the first side, wherein at least one cutting knife (7) of the at least one first rotor part (6a) and at least one second rotor part (6b) are configured to cover successively respective outlets on the first side and second side of the distribution chamber.

12. Method for clamping a rotor of a distributing device (1) according to one of the preceding claims, comprising the steps of:
a. providing a distributing device (1) comprising at least one distribution chamber (2) provided with at least one or more outlets (4) for liquid substance, and at least one first rotor part (6a) and at least one second rotor part (6b), which are fitted rotatably in the distribution chamber (2);
b. Pushing apart the at least one first rotor part (6a) and the at least one second rotor part (6b) with the tensioning device (10),
wherein in step b) the tensioning device (10) engages centrally on the first rotor part (6a) and on the second rotor part (6b).

## Patentansprüche

1. Verteilervorrichtung (1) für flüssige Substanzen, wie zum Beispiel Gülle, umfassend:
- mindestens eine Verteilerkammer (2), wobei die Verteilerkammer (2) mit mindestens einem Einlass (3) und einem oder mehreren Auslässen (4) für flüssige Substanz versehen ist;
- mindestens einen Rotor (5), der drehbar in der Verteilerkammer (2) gelagert ist, wobei der Rotor (5) mindestens ein erstes Rotorteil (6a) und mindestens ein zweites Rotorteil (6b) umfasst,
- mindestens eine Spannvorrichtung (10), zum Drücken in eine Richtung zu den Auslässen (4) hin und/oder zum Auseinanderdrücken relativ zueinander, von mindestens einem der beiden Rotorteile (6a, 6b), vorzugsweise von beiden Rotorteilen (6a, 6b),
wobei die mindestens eine Spannvorrichtung (10) mittig am ersten Rotorteil (6a) und am zweiten Rotorteil (6b) angreift,
wobei der Rotor (4) einen im Wesentlichen zylindrischen Querschnitt aufweist, **dadurch gekennzeichnet, dass** die Spannvorrichtung (10) mittig an einem zentralen Abschnitt angreift, der ein Bereich ist, der um die Achse des Rotors herum angeordnet ist, wobei der Bereich ein Radius von 1 %, 5 % oder 10 % des Radius des Rotors ist.

2. Verteilervorrichtung (1) nach Anspruch 1, wobei das mindestens eine erste Rotorteil (6a) und das mindestens eine zweite Rotorteil (6b) um im Wesentlichen dieselbe Drehachse drehbar sind.

3. Verteilervorrichtung (1) nach Anspruch 1 oder 2, wobei das mindestens eine erste Rotorteil (6a) und das mindestens eine zweite Rotorteil (6b) miteinander verbunden oder verbindbar sind, wobei die Rotorteile (6a, 6b) im verbundenen Zustand gemeinsam um eine Drehachse drehbar sind.

4. Verteilervorrichtung (1) nach Anspruch 3, wobei im verbundenen Zustand die Verbindung zwischen dem mindestens einen ersten Rotorteil (6a) und dem mindestens einen zweiten Rotorteil (6b) eine gegenseitige seitliche Bewegung zwischen den Rotorteilen (6a, 6b) zumindest teilweise verhindert.

5. Verteilervorrichtung (1) nach einem der vorhergehenden Ansprüche, wobei eine Achse der mindestens einen Spannvorrichtung (10) im Wesentlichen konzentrisch zu einer Drehachse mindestens eines von dem mindestens einen ersten Rotorteil (6a) und/oder dem mindestens einen zweiten Rotorteil (6b) ist.

6. Verteilervorrichtung (1) nach einem der vorhergehenden Ansprüche, wobei die mindestens eine Spannvorrichtung (10) mindestens einen Spannkörper (12) umfasst und mindestens ein einstellbares Spannelement (13) umfasst, wobei vorzugsweise der mindestens eine Spannkörper (12) direkt oder indirekt eine Spannung auf den zentralen Abschnitt des mindestens einen ersten Rotorteils (6a) und/oder des mindestens einen zweiten Rotorteils (6b) ausübt, um mindestens ein Schneidmesser (7) beider Rotorteile (6a, 6b) gegen die Auslässe (4) zu drücken.

7. Verteilervorrichtung (1) nach Anspruch 6, wobei eine Spannung, die von der Spannvorrichtung (10) ausgeübt wird, mittels des einstellbaren Spannelements (13) einstellbar ist, wobei die ausgeübte Spannung vom Ausmaß der Verschiebung des einstellbaren Spannelements (13) abhängt.

8. Verteilervorrichtung (1) nach einem der Ansprüche 6 bis 7, wobei ein Kontaktpunkt (15) zwischen dem mindestens einen Spannkörper (12) und mindestens einem von dem ersten Rotorteil (6a) oder dem zweiten Rotorteil (6b) nahe der Ebene angeordnet ist, die von mindestens einem Schneidmesser (7) aufgespannt wird, vorzugsweise in einem Abstand zwischen 0 cm und 50 cm von der Ebene, weiter vorzugsweise in einem Abstand zwischen 0 cm und 25 cm von der Ebene.

9. Verteilervorrichtung (1) nach einem der Ansprüche 6 bis 8, wobei mindestens ein Spannkörper (12) an einer Spannebene (16) angreift, wobei die Spannebene (16) ein Teil mindestens eines von dem ersten Rotorteil (â) oder dem zweiten Rotorteil (6b) ist, wobei vorzugsweise die mindestens eine Spannebene (16) mindestens eine Ausnehmung (17) und/oder einen Aufnahmeraum (17) umfasst, zum Aufnehmen mindestens eines Teils des mindestens einen Spannkörpers (12), vorzugsweise eines Teils eines Endes davon.

10. Verteilervorrichtung (1) nach einem der vorhergehenden Ansprüche, wobei die Verteilervorrichtung weiter eine Medienzufuhr, insbesondere eine Gaszufuhr (18), umfasst, wobei die Gaszufuhr (18) an eine Seite eines Schneidmessers (7) anschließt, die dem Auslass (4) zugewandt ist, wobei die mindestens eine Spannvorrichtung (10) zumindest teilweise in der Gaszufuhr (18) angeordnet ist.

11. Verteilervorrichtung (1) nach einem der vorhergehenden Ansprüche, wobei zwei oder mehr Auslässe der Verteilerkammer (2) an einer ersten Seite und einer zweiten Seite vorgesehen sind, die vorzugsweise von der ersten Seite abgewandt ist, wobei mindestens ein Schneidmesser (7) des mindestens einen ersten Rotorteils (6a) und mindestens ein Schneidmesser des mindestens einen zweiten Rotorteils (6b) dazu ausgebildet sind, nacheinander jeweilige Auslässe an der ersten Seite und der zweiten Seite der Verteilerkammer abzudecken.

12. Verfahren zum Festspannen eines Rotors einer Verteilervorrichtung (1) nach einem der vorhergehenden Ansprüche, umfassend die Schritte:
a. Bereitstellen einer Verteilervorrichtung (1), die mindestens eine Verteilerkammer (2) umfasst, die mit mindestens einem oder mehreren Auslässen (4) für flüssige Substanz versehen ist, und mindestens ein erstes Rotorteil (6a) und mindestens ein zweites Rotorteil (6b), die drehbar in der Verteilerkammer (2) angebracht sind;
b. Auseinanderdrücken des mindestens einen ersten Rotorteils (6a) und des mindestens einen zweiten Rotorteils (6b) mit der Spannvorrichtung (10), wobei in Schritt b) die Spannvorrichtung (10) mittig am ersten Rotorteil (6a) und am zweiten Rotorteil (6b) angreift.

## Revendications

1. Dispositif de distribution (1) pour substances liquides, telles que par exemple du lisier, comprenant :
- au moins une chambre de distribution (2), ladite chambre de distribution (2) étant pourvue d'au moins une entrée (3) et d'une ou plusieurs sorties (4) pour la substance liquide ;
- au moins un rotor (5) monté de manière rotative dans la chambre de distribution (2), dans lequel le rotor (5) comprend au moins une première partie de rotor (6a) et au moins une deuxième partie de rotor (6b),
- au moins un dispositif de serrage (10), destiné à pousser dans une direction vers les sorties (4) et/ou à écarter l'une de l'autre au moins l'une des deux parties de rotor (6a, 6b), de préférence les deux parties de rotor (6a, 6b),
dans lequel le au moins un dispositif de serrage (10) vient en prise de manière centrale sur la première partie de rotor (6a) et sur la deuxième partie de rotor (6b), dans lequel le rotor (4) présente une section transversale sensiblement cylindrique, **caractérisé en ce que** le dispositif de serrage (10) vient en prise de manière centrale sur une partie centrale constituant une région qui est située autour de l'axe du rotor, dans lequel la région est un rayon de 1 %, 5 % ou 10 % du rayon du rotor.

2. Dispositif de distribution (1) selon la revendication 1, dans lequel la au moins une première partie de rotor (6a) et la au moins une deuxième partie de rotor (6b) peuvent tourner autour d'un axe de rotation sensiblement identique.

3. Dispositif de distribution (1) selon la revendication 1 ou 2, dans lequel la au moins une première partie de rotor (6a) et la au moins une deuxième partie de rotor (6b) sont reliées ou peuvent être reliées l'une à l'autre, dans lequel, à l'état relié, les parties de rotor (6a, 6b) peuvent tourner conjointement autour d'un axe de rotation.

4. Dispositif de distribution (1) selon la revendication 3, dans lequel, à l'état relié, la liaison entre la au moins une première partie de rotor (6a) et la au moins une deuxième partie de rotor (6b) empêche au moins partiellement un mouvement latéral mutuel entre les parties de rotor (6a, 6b).

5. Dispositif de distribution (1) selon l'une des revendications précédentes, dans lequel un axe du au moins un dispositif de serrage (10) est sensiblement concentrique avec un axe de rotation d'au moins l'une parmi la au moins une première partie de rotor (6a) et/ou la au moins une deuxième partie de rotor (6b).

6. Dispositif de distribution (1) selon l'une des revendications précédentes, dans lequel le au moins un dispositif de serrage (10) comprend au moins un corps de serrage (12) et comprend au moins un élément de serrage réglable (13), de préférence dans lequel le au moins un corps de serrage (12) exerce, directement ou indirectement, une tension sur la partie centrale de la au moins une première partie de rotor (6a) et/ou de la au moins une deuxième partie de rotor (6b) afin de forcer au moins un couteau de coupe (7) des deux parties de rotor (6a, 6b) contre les sorties (4).

7. Dispositif de distribution (1) selon la revendication 6, dans lequel une tension qui est exercée par le dispositif de serrage (10) est réglable au moyen de l'élément de serrage réglable (13), dans lequel la tension exercée dépend de l'ampleur du déplacement de l'élément de serrage réglable (13).

8. Dispositif de distribution (1) selon l'une des revendications 6 à 7, dans lequel un point de contact (15) entre le au moins un corps de serrage (12) et au moins l'une parmi la première partie de rotor (6a) ou la deuxième partie de rotor (6b) est situé à proximité du plan qui est défini par au moins un couteau de coupe (7), de préférence à une distance comprise entre 0 cm et 50 cm dudit plan, plus préférablement à une distance comprise entre 0 cm et 25 cm dudit plan.

9. Dispositif de distribution (1) selon l'une des revendications 6 à 8, dans lequel au moins un corps de serrage (12) vient en prise sur un plan de serrage (16), ledit plan de serrage (16) faisant partie d'au moins l'une parmi la première partie de rotor (â) ou la deuxième partie de rotor (6b), de préférence dans lequel le au moins un plan de serrage (16) comprend au moins un évidement (17) et/ou espace de réception (17), destiné à recevoir au moins une partie du au moins un corps de serrage (12), de préférence une partie d'une extrémité de celui-ci.

10. Dispositif de distribution (1) selon l'une des revendications précédentes, dans lequel le dispositif de distribution comprend en outre une alimentation en fluide, en particulier une alimentation en gaz (18), dans lequel l'alimentation en gaz (18) se raccorde à un côté d'un couteau de coupe (7) tourné vers la sortie (4), dans lequel le au moins un dispositif de serrage (10) est situé au moins partiellement dans l'alimentation en gaz (18).

11. Dispositif de distribution (1) selon l'une des revendications précédentes, dans lequel deux sorties ou plus de la chambre de distribution (2) sont prévues sur un premier côté et un deuxième côté, de préférence opposé au premier côté, dans lequel au moins un couteau de coupe (7) de la au moins une première partie de rotor (6a) et au moins une deuxième partie de rotor (6b) sont configurés pour recouvrir successivement des sorties respectives sur le premier côté et le deuxième côté de la chambre de distribution.

12. Procédé de serrage d'un rotor d'un dispositif de distribution (1) selon l'une des revendications précédentes, comprenant les étapes consistant à :
a. fournir un dispositif de distribution (1) comprenant au moins une chambre de distribution (2) pourvue d'au moins une ou plusieurs sorties (4) pour la substance liquide, et au moins une première partie de rotor (6a) et au moins une deuxième partie de rotor (6b), qui sont montées de manière rotative dans la chambre de distribution (2) ;
b. écarter la au moins une première partie de rotor (6a) et la au moins une deuxième partie de rotor (6b) au moyen du dispositif de serrage (10), dans lequel, à l'étape b), le dispositif de serrage (10) vient en prise de manière centrale sur la première partie de rotor (6a) et sur la deuxième partie de rotor (6b).
